# FASCICULE DE BREVET EUROPEEN

(11) **EP 3 448 636 B1**
(45) Date de publication et mention de la délivrance du brevet: **26.11.2025**
(21) Numéro de dépôt: 17725690.6
(22) Date de dépôt: 28.04.2017
(51) Int. Cl.: B05B 12/00, B05B 13/00, B05B 13/04, B25J 13/06, B25J 9/16, B25J 11/00

(54) **AUTOMATE POUR LE TRAITEMENT D'UNE SURFACE**
AUTOMAT ZUR BEHANDLUNG EINER OBERFLÄCHE
AUTOMATON FOR TREATING A SURFACE

(30) Priorité: 29.04.2016 FR 1653918
(43) Date de publication de la demande: 06.03.2019
(73) Titulaire: Les Companions, 59700 MARCQ-EN-BAROEUL (FR)
(72) Inventeur: RENNUIT, Antoine, 59290 Wasquehal (FR)
(74) Mandataire: Cabinet Beau de Loménie
(86) Numéro de dépôt international: PCT/FR2017/051018
(87) Numéro de publication internationale: WO 2017/187105

(56) Documents cités:
- EP-A2- 2 862 678
- WO-A2-2016/063074
- JP-A- S6 211 908
- US-A1- 2013 343 640
- US-A1- 2014 135 986
- US-A1- 2014 303 775
- US-A1- 2015 375 390

## Description

### Arrière-plan de l'invention

La présente invention concerne un automate de traitement d'une surface, par exemple de mise en peinture. Plus particulièrement, la présente invention concerne une interface de commande d'un tel automate.

Il existe déjà des robots destinés à traiter une surface, par exemple la mettre en peinture ou la poncer. De tels robots sont notamment utilisés dans le domaine automobile, pour mettre en peinture les carrosseries des véhicules. Ces robots sont autonomes et sont programmés pour effectuer une série d'opérations sans le contrôle d'un opérateur : ils remplacent alors une ou plusieurs personnes en effectuant les tâches programmées préalablement dans l'ordinateur de commande du robot.

Toutefois, ces robots-peintres, tout comme les autres robots utilisés sur des chaines d'assemblage, sont immobiles sur le sol, et seul le bras tenant l'outil, est mobile : leur domaine d'action est donc géographiquement limité. Par ailleurs, et afin d'éviter les accidents avec d'éventuelles personnes pouvant se trouver à proximité des robots, ceux-ci sont généralement entourés par une zone de sécurité dans laquelle le robot est amené à travailler et dans laquelle les individus ne doivent pas entrer.

Il existe également des robots dans le bâtiment. De tels robots sont notamment utilisés pour travailler à des endroits difficilement accessibles par des individus, voire même interdits. Tel est le cas par exemple lorsque la surface à traiter comprend des plafonds hauts, ou bien est située dans une zone avec des risques de radiations. Un exemple de robot pouvant intervenir dans de telles conditions est notamment décrit dans la demande FR 2 902 038.

On constate alors que le robot est directement commandé par un opérateur, pour traiter la surface à sa place et sous son contrôle. Ainsi, de tels robots ne sont pas autonomes, et nécessitent d'être commandés en continu par un opérateur : l'utilisation d'un tel robot permet alors de faciliter la tâche de l'opérateur, mais requiert toujours sa présence, que ce soit à côté ou à distance du robot. Le robot ne remplace alors pas l'opérateur devant effectuer l'opération, mais agit plutôt comme un outil qui reste sous le contrôle de l'opérateur et qui n'agit pas seul.

Le document WO2016/63074 divulgue un appareil pour pulvériser un matériau sur une surface. L'appareil comprend au moins un élément allongé ayant une extrémité distale et une extrémité proximale, au moins une buse de pulvérisation montée à l'extrémité distale de l'élément allongé pour pulvériser le matériau selon un motif de pulvérisation, la buse de pulvérisation étant reliée à une entrée de matériau pulvérisé au niveau de l'extrémité proximale de l'élément allongé, une caméra montée au niveau de l'extrémité distale de l'élément allongé et connectée à une sortie de caméra au niveau de l'extrémité proximale de l'élément allongé, la caméra étant agencée pour capturer des images du motif de pulvérisation, et un mécanisme de commande agencé pour commander le fonctionnement de la buse de pulvérisation à partir de l'extrémité proximale de l'élément allongé.

Ainsi, le robot ne permet pas d'effectuer un travail en lieu et place d'un individu, mais nécessite toujours une supervision. En particulier, le robot ne peut traiter une surface donnée que grâce aux instructions données par l'opérateur lors du traitement de ladite surface, afin d'adapter les actions effectuées par le robot en temps réel.

### Objet et résumé de l'invention

La présente invention vise à résoudre les différents problèmes techniques énoncés précédemment. En particulier, la présente invention vise à proposer un moyen permettant d'indiquer audit automate le travail à effectuer de manière autonome. Plus particulièrement, la présente invention vise à proposer une interface facilitant l'indication d'instructions par un opérateur.

Ainsi, selon un aspect de l'invention, il est proposé un automate pour le traitement d'une surface à traiter selon la revendication 1. L'automate comporte un moyen de traitement, par exemple un bras, comprenant une extrémité mobile configurée pour traiter une surface, et une interface configurée pour indiquer à l'automate la surface à traiter. En particulier, l'interface comporte un écran configuré pour afficher une représentation d'au moins une partie de l'environnement dans lequel se trouve la surface à traiter, et l'interface est configurée pour permettre à une personne de sélectionner ou dessiner la surface à traiter sur la représentation affichée à l'écran.

Grâce à son interface, il devient plus aisé pour l'opérateur d'indiquer à l'automate les surfaces à traiter de manière autonome. Notamment, l'interface est configurée pour être intuitive et simple d'utilisation. Elle permet non seulement de faciliter l'entrée des instructions, mais également la vérification de celles-ci avant que l'automate ne travaille.

Préférentiellement, l'automate est destiné au milieu professionnel, et en particulier aux usages dans le bâtiment et dans l'industrie.

Préférentiellement, la surface à traiter est une surface intérieure, par exemple une surface intérieure d'une pièce, et l'écran est configuré pour afficher une représentation d'au moins une partie de la pièce dans laquelle se trouve la surface à traiter. Dit autrement, l'environnement de la surface à traiter est alors la pièce dans laquelle se trouve la surface à traiter.

Préférentiellement, la surface à traiter est une surface d'un objet placé dans une pièce, et l'écran est configuré pour afficher une représentation d'au moins une partie de la pièce dans lequel se trouve l'objet. Dit autrement, l'environnement de la surface à traiter est alors la pièce dans laquelle se trouve l'objet présentant la surface à traiter.

Alternativement, la surface à traiter est une surface extérieure, par exemple une partie de façade d'un immeuble, et l'écran est configuré pour afficher une représentation d'au moins une partie de la façade de l'immeuble. Dit autrement, l'environnement de la surface à traiter est alors la façade entourant la surface à traiter.

La surface à traiter est la surface d'un ou plusieurs murs ou façades, d'un ou plusieurs plafonds, d'un ou plusieurs objets, et/ou une ou plusieurs surfaces quelconques.

L'écran est configuré pour afficher une représentation en 3 dimensions d'au moins une partie de l'environnement dans lequel se trouve la surface à traiter. On entend par « représentation en 3 dimensions », une représentation dans laquelle l'utilisateur peut se déplacer, tout en respectant les différentes proportions, et notamment la perspective, des éléments affichés. Une telle représentation en 3 dimensions permet notamment à l'utilisateur de modifier l'angle de vision de la partie de l'environnement affichée par l'écran, tout en ayant toujours une représentation fidèle des proportions. L'utilisateur peut ainsi se déplacer, sur l'écran, dans la partie de l'environnement comme s'il s'y trouvait réellement. Il peut alors plus facilement visualiser les différentes surfaces de la partie de l'environnement, et le cas échéant plus facilement les sélectionner pour le traitement.

Préférentiellement, l'interface est également configurée pour afficher, par exemple graphiquement ou textuellement, des informations relatives au fonctionnement de l'automate, par exemple ses paramètres de fonctionnement ou des anomalies. L'interface permet alors un dialogue entre l'automate, qui est destiné à fonctionner de façon autonome, et l'opérateur chargé de surveiller son fonctionnement. En indiquant les paramètres de fonctionnement et les éventuelles anomalies, on s'assure que l'automate fonctionne comme souhaité et on peut anticiper les éventuels problèmes à venir (recharge en peinture par exemple).

Selon un premier mode de réalisation, l'interface est configurée pour identifier, sur la partie de l'environnement affichée par l'écran, au moins une surface déterminée entourée d'un contour fermé. Selon ce premier mode de réalisation, l'interface est capable d'identifier les différentes surfaces représentées sur son écran. Une telle identification permet notamment, dans un second temps, à l'opérateur de choisir les surfaces à traiter par sélection des surfaces identifiées par l'interface.

L'interface est configurée pour permettre à une personne : de sélectionner la surface à traiter, par sélection, sur la représentation affichée à l'écran, d'au moins une surface déterminée entourée d'un contour fermé, et éventuellement d'exclure au moins une portion à ne pas traiter de ladite surface déterminée, par sélection, sur la représentation affichée à l'écran, d'une portion déterminée entourée d'un contour fermé située à l'intérieur de ladite surface déterminée. Comme indiqué précédemment, les différentes surfaces de la zone à traiter étant identifiées par l'interface, il suffit alors à l'opérateur de sélectionner celles à traiter, et éventuellement celles à ne pas traiter, pour que l'interface puisse avoir ses instructions de travail. Par ailleurs, l'interface peut également signaler à l'écran les surfaces sélectionnées, ou exclues, par l'opérateur, afin de faciliter la vérification des instructions données à l'automate.

Selon un autre mode de réalisation, l'interface est configurée pour permettre à une personne : de sélectionner la surface à traiter, par réalisation, sur la représentation affichée à l'écran, d'au moins un contour fermé définissant une surface délimitée, et éventuellement d'exclure au moins une portion à ne pas traiter de ladite surface délimitée, par réalisation, sur la représentation affichée à l'écran, d'un contour fermé définissant une portion délimitée située à l'intérieur de ladite surface délimitée. Dans ce mode de réalisation, le choix des surfaces à traiter est fait par l'opérateur, en réalisant le contour de ladite surface à traiter. Toutefois, la précision de la sélection des surfaces à traiter peut être limitée par le mode de réalisation du contour, et peut ainsi nécessiter un temps supplémentaire par rapport au premier mode de réalisation, afin de s'assurer que les limitées indiquées à l'interface correspondent bien aux limites voulues.

L'interface est configurée pour identifier, sur la partie de l'environnement affiché par l'écran, au moins une singularité, par exemple un ou plusieurs coins ou une ou plusieurs arêtes. L'interface est également configurée pour modifier le contour fermé d'au moins une surface délimitée de manière à le faire correspondre avec une ou plusieurs desdites singularités. Dans ce cas, l'interface adapte le contour réalisé par l'opérateur de manière à le faire correspondre avec des éléments identifiables par l'interface. En particulier, dans le cas d'un modèle géométrique discrétisé de l'environnement, c'est-à-dire sous forme d'un ensemble de points, l'interface peut alors faire correspondre certaines portions du contour dessiné par l'opérateur avec une ou plusieurs singularités de l'environnement déterminées à partir du modèle discrétisé.

Préférentiellement, l'écran de l'interface est tactile et/ou l'interface comprend un dispositif de pointage manuel, distinct de l'écran, tel une souris ou un pavé tactile. Il s'agit ici de différents moyens de pointage pouvant être utilisés pour sélectionner sur l'écran le contour ou la surface souhaitée par l'opérateur.

Préférentiellement, l'interface est également configurée pour permettre à une personne d'associer à la surface à traiter sélectionnée, un ou plusieurs paramètres de traitement. On peut ainsi associer différents paramètres à différentes surfaces identifiées séparément. Il est alors possible de donner des instructions uniques à l'automate, et laisser celui-ci effectuer les différentes tâches demandées sur les différentes surfaces choisies, même si les paramètres de traitement ne sont pas les mêmes.

Préférentiellement, la surface est sélectionnée par combinaison de plusieurs sous-sélections. Plus précisément, le travail pouvant être effectué par l'automate ne se limite pas à une unique surface continue, mais peut comporter différentes surfaces identifiées et distinctes les unes des autres. Alternativement, la surface à traiter peut être continue, mais être sélectionnée par addition et/ou soustraction de plusieurs sous-sélections.

Selon un premier mode de réalisation, l'écran est configuré pour afficher la représentation d'au moins une partie de l'environnement dans lequel se trouve la surface à traiter, à partir d'un fichier de modélisation 3D dudit environnement ou à partir d'un fichier numérique en 3 dimensions de l'environnement dans lequel se trouve la surface à traiter. Dans ce premier mode de réalisation, l'interface utilise une modélisation 3D de l'environnement dans lequel l'automate doit travailler : il est notamment possible, pour l'interface, d'identifier les différentes surfaces dudit environnement grâce à leur modélisation dans le fichier 3D.

Selon un autre mode de réalisation, l'écran est configuré pour afficher la représentation, notamment en 3 dimensions, d'au moins une partie de l'environnement dans lequel se trouve la surface à traiter, à partir des données obtenues dans l'environnement, par exemple reçues d'un moyen de balayage dudit environnement tel un scanner ou une caméra 3D. Dans ce cas, l'interface mesure ou enregistre directement dans l'environnement à travailler, les informations nécessaires à l'identification d'une surface à traiter. L'interface peut ainsi scanner l'environnement, ou bien utiliser une caméra 3D voire un appareil photo pour représenter, notamment en 3 dimensions, une portion de l'environnement sur son écran. L'interface peut également mettre en œuvre des traitements d'image ou exploiter des informations saisies par l'opérateur (géométrie, délimitation, ...), pour déterminer les différentes parties de l'environnement. L'interface peut, par exemple, déterminer les jonctions et autres singularités entre surfaces en fonction de la luminosité de celles-ci, d'éléments géométriques fournis par l'opérateur, ou d'autres informations. Un tel mode de réalisation présente l'avantage d'être directement opérationnel in situ, et de ne pas nécessiter une modélisation préalable de l'environnement.

Préférentiellement, une des façades d'un immeuble est la surface à traiter.

Préférentiellement, une des surfaces intérieures d'une pièce est la surface à traiter.

Préférentiellement, l'automate est configuré pour se déplacer à l'intérieur de la pièce.

Préférentiellement, l'automate comporte également :
- une embase configurée pour se déplacer sur le sol, et
- une plateforme montée sur l'embase et configurée pour se déplacer, au moins en partie, perpendiculairement à l'embase, par exemple verticalement,
le moyen de traitement étant monté sur la plateforme.

Un tel automate permet de traiter une surface étendue par déplacement horizontal grâce à son embase, et déplacement vertical grâce à sa plateforme. On obtient donc un automate pouvant travailler de manière autonome, sans nécessiter la supervision continue d'une personne. On diminue donc le temps d'intervention de l'opérateur sur l'automate, l'opérateur pouvant à son tour effectuer un traitement de la surface en même temps que l'automate, par exemple en effectuant les travaux nécessitant une technicité ou un savoir-faire particulier tel que le traitement de surfaces spécifiques comme le contour de prises murales, l'arrière de tuyaux, les escaliers, ...

Préférentiellement, la plateforme et l'embase restent immobiles quand le moyen de traitement est déplacé, et/ou, le moyen de traitement reste immobile quand la plateforme ou l'embase est déplacée. Les mouvements de l'automate sont délibérément programmés pour être effectués séparément les uns des autres, autrement dit : soit c'est la plateforme et/ou l'embase qui bougent, soit c'est le moyen de traitement, mais pas les deux en même temps. Il devient alors plus facile pour les personnes pouvant travailler autour de l'automate de prévoir et d'anticiper ses mouvements, afin d'agir en conséquence.

Préférentiellement, le traitement d'une surface à traiter est une mise en peinture de ladite surface à traiter, un ponçage de ladite surface à traiter et/ou une projection d'enduit sur ladite surface à traiter.

Préférentiellement, la surface à traiter est une surface intérieure d'un immeuble. En particulier, la surface à traiter peut être une surface intérieure d'une maison, d'un immeuble d'habitations ou d'un immeuble de bureaux. Le traitement concerne ici des surfaces traitées normalement par des opérateurs, car impliquant des contraintes d'accès (taille réduite pour passer à travers les portes ou par les escaliers de l'immeuble, poids maximum limité par la structure de l'immeuble), de surface (les surfaces intérieures d'un immeuble sont généralement plus petites et plus accessibles par des opérateurs que les surfaces extérieures) et d'alimentation électrique (absence d'installation électrique locale dans un immeuble en construction) qui conduisent normalement à confier le traitement des surfaces à des opérateurs plutôt qu'à des automates.

Préférentiellement, la surface à traiter peut également être une surface extérieure d'un immeuble. Ainsi, la surface à traiter peut être une façade d'un immeuble, ou bien encore la surface d'une terrasse ou d'un balcon.

En particulier, le traitement de surface peut être un traitement mis en œuvre de manière industrielle et automatisée. Dans ce cas, le procédé peut comprendre une étape de recherche et/ou d'identification de chaque nouvelle surface à traiter, avant les étapes de traitement. Ainsi, l'automate peut être configuré pour identifier une nouvelle surface à traiter sur une chaine de fabrication dans laquelle les surfaces à traiter se translatent devant l'automate, ou bien peut être configuré pour se déplacer, dans une chaine de fabrication statique, d'une surface à traiter à l'autre. Les surfaces à traiter peuvent être : soit toutes identiques, soit de forme connue par l'automate et identifiable dans une base de données de surfaces à traiter, soit de forme quelconque mais dont les caractéristiques (les contours notamment) sont identifiables par l'automate.

Préférentiellement, l'automate est configuré pour passer par les ouvertures, notamment les portes, d'un immeuble, tel qu'une maison, un immeuble d'habitations ou un immeuble de bureaux. Par exemple, l'automate peut présenter une hauteur inférieure ou égale à 2,5 mètres, de préférence inférieure ou égale à 2 mètres. L'automate peut également présenter une largeur inférieure ou égale à 2 mètres, de préférence inférieure ou égale à 1 mètre. L'automate peut également présenter une longueur inférieure ou égale à 4 mètres, de préférence inférieure ou égale à 2 mètres. Par ailleurs, l'automate peut présenter un poids inférieur ou égal à 500kg, de préférence inférieur ou égal à 250kg. On obtient ainsi un automate compact pouvant circuler à l'intérieur d'un immeuble : c'est-à-dire passer par les portes ou pouvant utiliser un ascenseur.

Par ailleurs, de telles caractéristiques de taille et de poids, permettent également d'utiliser l'automate dans différents environnements très différents, tout en restant opérationnel, notamment grâce à sa maniabilité due à son faible encombrement.

Préférentiellement, l'automate est configuré pour se déplacer en extérieur, par exemple sur la voie publique telle que les trottoirs.

Alternativement, l'automate peut être configuré pour se déplacer dans un environnement industriel, tel une chaîne de fabrication.

**Préférentiellement,** l'automate comporte également un ou plusieurs capteurs de localisation dans l'espace et par rapport à la surface à traiter, par exemple des capteurs à ultrasons, des capteurs laser, des capteurs de temps de vol, des systèmes vidéo ou bien encore des capteurs avec balises délimitant au moins une partie de la surface à traiter. Les capteurs ont pour but de favoriser le positionnement de l'automate dans son environnement, afin de faciliter l'identification des surfaces à traiter, ainsi que la délimitation desdites surfaces dans l'espace.

L'automate peut ainsi comprendre un système optique de localisation, par exemple une ou plusieurs caméras, telles des caméras positionnées de manière stéréoscopiques, permettant à l'automate de se positionner dans son environnement en trois dimensions. On assure ainsi la précision des déplacements et des opérations effectuées par l'automate.

Préférentiellement, l'automate comprend également des capteurs de présence et est configuré pour limiter, voire éviter, les contacts avec des obstacles potentiels, par exemple avec des personnes. De tels capteurs ont notamment pour but de préserver l'intégrité physique des personnes susceptibles de travailler ou de se trouver à proximité de l'automate. Ainsi, grâce aux différents capteurs, l'automate est configuré pour détecter la présence de telles personnes, et agir en conséquence afin de ne pas les blesser ou les gêner. L'automate devient alors collaboratif, puisqu'il peut venir épauler des personnes dans leur travail, en effectuant le sien à proximité. On entend par « collaboratif » un automate pouvant travailler à proximité d'individus, sans barrière.

### Brève description des dessins

L'invention et ses avantages seront mieux compris à la lecture de la description détaillée d'un mode de réalisation particulier, pris à titre d'exemple nullement limitatif et illustré par les dessins annexés sur lesquels :
- la figure **1** est une vue schématique en perspective d'un automate selon la présente invention,
- les figures **2** à 4 représentent un premier mode de sélection d'une surface via l'interface de l'automate, selon la présente invention, et
- les figures **5** et **6** représentent un deuxième mode de sélection d'une surface via l'interface de l'automate, selon la présente invention.

### Description détaillée de l'invention

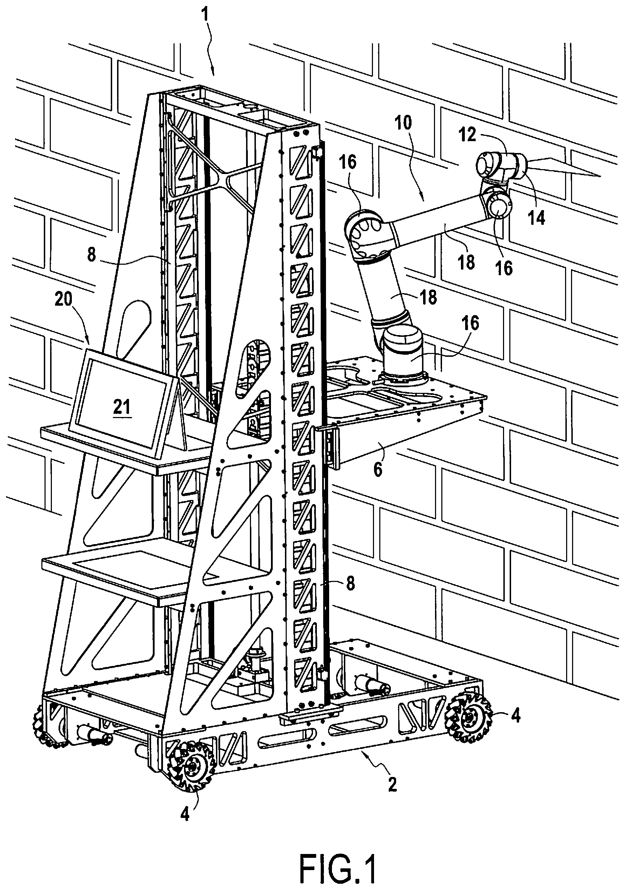

La figure 1 illustre de manière schématique une vue en perspective d'un automate de traitement d'une surface à traiter, selon la présente invention. L'automate 1 comprend ainsi une embase 2 permettant de déplacer l'automate sur le sol, et comportant : des moyens de déplacement, dans le cas présent des roues 4 avantageusement configurées pour ne pas abîmer le sol, par exemple en étant formées ou revêtues par un matériau souple comme un matériau élastique, ainsi qu'un moyen d'entraînement des roues, par exemple un moteur (non représenté). L'embase 2 constitue un châssis pour l'automate 1, et supporte l'ensemble des éléments de l'automate 1 qui sont décrits ci-dessous.

L'automate 1 comporte également une plateforme 6. La plateforme 6 est montée sur l'embase 2, par exemple via deux rails 8 montés sensiblement perpendiculairement sur l'embase 2. La plateforme 6 est configurée pour se déplacer le long des rails 8, c'est-à-dire sensiblement perpendiculairement à l'embase 2, grâce à un moyen d'entraînement (non-représenté), par exemple un moteur. On obtient donc une plateforme 6 pouvant se déplacer par exemple verticalement pour atteindre différentes hauteurs de la surface à traiter.

L'automate 1 comprend par ailleurs un moyen de traitement, dans le cas présent un bras 10. Le bras 10 est monté sur la plateforme 6 et comprend d'une part une extrémité de traitement 12 au niveau de laquelle est monté l'outil de traitement de la surface 14, dans le cas présent une buse de projection de peinture 14, et d'autre part une ou plusieurs articulations 16 reliant une ou plusieurs portions de bras 18. Les articulations 16 permettent de déplacer et d'orienter l'outil de traitement 14 comme souhaité, sur l'ensemble d'une surface de superficie donnée. La superficie dépend notamment de la longueur des portions de bras 18 et de l'amplitude des articulations 16. Par ailleurs, le bras 10 permet également de déplacer l'outil de traitement 14 parallèlement à la surface à traiter, afin d'obtenir un résultat de traitement uniforme.

Enfin, l'automate 1 comporte une unité de commande 20. L'unité de commande 20 peut être montée sur l'embase 2 de l'automate 1, ou bien être située à distance (délocalisée), ou bien être en partie montée sur l'embase 2 et en partie délocalisée. L'unité de commande 20 permet de commander les différents moyens de l'automate 1, notamment les moyens d'entraînement de l'embase 2, de la plateforme 6 et du bras 10. Les commandes sont notamment déterminées par l'unité de commande 20 en fonction des instructions et des données qui lui sont communiquées.

Plus précisément, l'unité de commande électronique 20 est configurée pour planifier le traitement de la surface à traiter, en tenant compte de la structure de l'automate 1, et en facilitant le travail d'individus à proximité de l'automate 1.

Ainsi, l'unité de commande 20 peut par exemple être configurée pour, dans un premier temps, diviser la surface à traiter en subdivisions de superficie inférieure ou égale à la superficie donnée. Autrement dit, la surface à traiter est subdivisée en portions pouvant être traitée individuellement uniquement par déplacement du bras, la plateforme 6 et l'embase 2 restant immobiles. Puis, l'unité de commande est configurée pour traiter la surface de chaque subdivision en commandant le déplacement du bras 10. Lorsque la subdivision est traitée, l'unité de commande électronique 20 commande alors de changer de subdivision en déplaçant la plateforme 6 verticalement, et/ou en déplaçant l'embase 2 sur le sol. Dans un tel cas, l'automate 1 travaille par subdivision, ou cellule, chaque subdivision correspondant à la surface pouvant être traitée par le seul mouvement du bras 10 de l'automate 1. Puis, l'automate 1 se déplace de subdivision en subdivision, par déplacement de la plateforme 6 et/ou de l'embase 2.

Les subdivisions peuvent être obtenues en opérant un découpage de la surface à traiter selon un quadrillage régulier dont les lignes correspondent aux déplacements de la plateforme 6 et de l'embase 2, dans le cas présent des lignes verticales et horizontales. Une fois le découpage de la surface à traiter réalisé par l'unité de commande 20, celle-ci peut alors commander l'automate 1 pour traiter successivement lesdites différentes subdivisions. Préférentiellement, toutes les subdivisions correspondant à une même position de l'embase 2, c'est-à-dire ne nécessitant le déplacement que du bras 10 et de la plateforme 6, sont traitées successivement. Puis, l'embase 2 est déplacée à une autre position pour traiter successivement toutes les subdivisions correspondantes, et ainsi de suite. On limite de cette façon les déplacements au sol de l'automate 1, ce qui favorise le travail de l'automate 1 avec des individus à proximité.

Au sein de chaque subdivision, le traitement appliqué par l'automate 1 peut également être planifié, notamment afin de donner un rendu proche de celui fourni par un professionnel. Par exemple, dans le cas d'un traitement de mise en peinture, l'unité de commande 20 peut être configurée pour commander le traitement d'abord d'un bord ou contour de la surface à traiter : un tel traitement ne s'applique que lorsque la subdivision en question est positionnée au bord de la surface à traiter, et n'est pas pertinent si la subdivision en question est entièrement entourée d'autres subdivisions. Une telle méthode correspond au *rechampi,* technique consistant à d'abord travailler les contours de la surface avant de travailler le centre.

Une fois le contour réalisé, l'unité de commande 20 peut alors commander le bras 10 de manière à traiter le reste de la superficie de la subdivision, c'est-à-dire l'intérieur de la subdivision. Pour ce travail, l'unité de commande 20 peut notamment prévoir un déplacement du bras 10 selon une grille horizontale ou verticale, c'est-à-dire traiter l'intérieur de la subdivision en suivant certaines lignes de contour de ladite subdivision (contours horizontaux ou verticaux).

De même, lorsque la subdivision comporte un élément particulier, tel un interrupteur ou une prise électrique, la même technique peut être utilisée : l'unité de commande 20 peut être configurée pour effectuer le traitement le long du contour de l'élément particulier, avant d'effectuer le traitement entre l'élément particulier et le contour de la subdivision.

Lorsque toutes les subdivisions sont traitées, l'automate 1 peut alors s'arrêter. Il convient de noter que dans l'exemple décrit précédemment, la surface à traiter est une surface unique. Toutefois, le travail de l'automate 1 selon l'invention ne s'arrête pas à de telles surfaces, mais peut traiter une surface à traiter comportant plusieurs parties distinctes et séparées et les unes des autres. Dans ce cas, chaque partie de la surface à traiter est travaillée comme indiqué précédemment, c'est-à-dire est spécifiquement divisée en subdivisions qui sont travaillées successivement. Lorsqu'une partie est finie, l'unité de commande 20 commande l'embase 2 et/ou la plateforme 6 de manière à se déplacer vers une autre partie non-traitée de la surface à traiter.

Un tel déplacement peut notamment s'opérer, en pratique, d'une part en attribuant à chaque partie distincte de la surface à traiter, un référentiel spécifique de travail utilisé par l'automate 1 pour le traitement de ladite partie distincte de surface, et d'autre part en positionnant, dans un référentiel unique global, les différents référentiels spécifiques de travail entre eux, afin de permettre à l'automate 1 de se déplacer d'une partie distincte de la surface à traiter à une autre partie distincte de la surface à traiter. Par exemple, les différentes parties de surface à traiter peuvent être deux murs d'une pièce, par exemple deux murs contigus mais présentant un angle entre eux, ou bien deux murs parallèles distants se faisant face. Dans les deux cas, l'automate 1 est obligé de se réorienter par rapport à la partie de surface à traiter, lorsqu'il passe d'une partie de surface à une autre, avant d'entamer le traitement de ladite partie de surface.

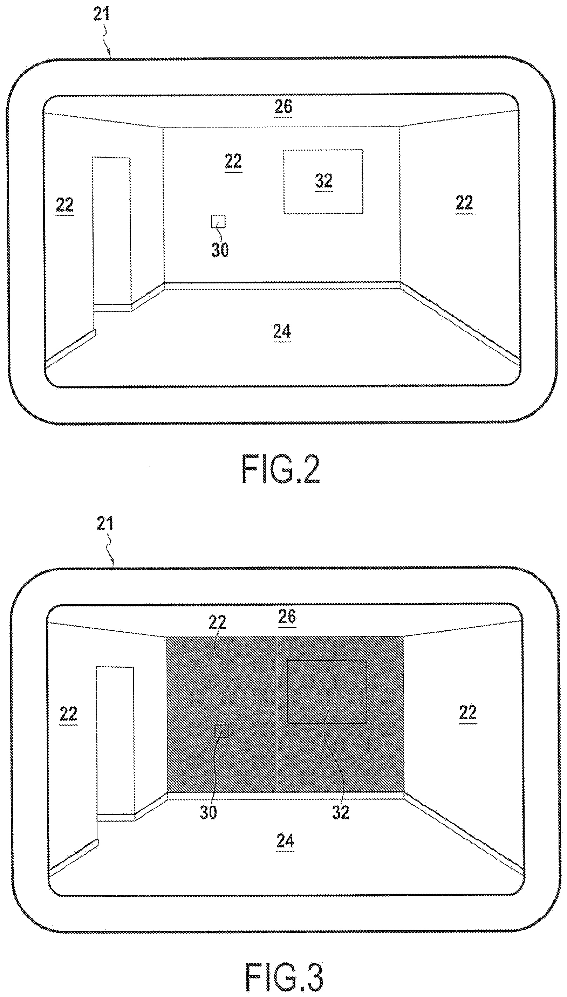

Afin de sélectionner les surfaces à traiter par l'automate, l'interface de celui-ci comporte un écran 21 configuré pour afficher une portion de l'environnement, c'est-à-dire de la pièce ou des façades adjacentes, dans lequel doit travailler l'automate. Un tel affichage est notamment illustré sur les différentes figures 2 à 6.

Les figures 2 à 4 illustrent un premier mode de sélection d'une surface via l'interface. Dans ce premier mode de sélection, on considère que l'interface est configurée pour identifier les différentes surfaces affichées sur son écran 21. On considère également que la surface à traiter est une surface intérieure d'une pièce, et que l'environnement de la surface à traiter est la pièce dans laquelle se trouve la surface à traiter.

Ainsi, figure 2 illustre une portion de pièce telle qu'affichée par l'écran 21 de l'interface. La portion de pièce peut comprendre par exemple trois murs 22, un plancher 24, un plafond 26, ainsi qu'un interrupteur 30 et une portion délimitée de mur 32, dans le cas présent une fenêtre par exemple. Chacun de ses éléments est délimité par un contour fermé connu de l'interface, et constitue ainsi une surface déterminée pour l'interface.

Les différentes surfaces déterminées sont ainsi affichées à l'écran 21 de l'interface, et peuvent alors être sélectionnées par l'opérateur, par exemple avec son doigt si l'écran 21 est tactile, ou bien à l'aide d'un dispositif de pointage.

La figure 3 illustre l'affichage de l'écran 21 après sélection d'une surface déterminée sélectionnée, en particulier celle du mur 22 du fond. Le contour fermé du mur 22 du fond englobant également l'interrupteur 30 et la portion de mur 32, les trois surfaces déterminées sont considérées comme sélectionnées par l'interface.

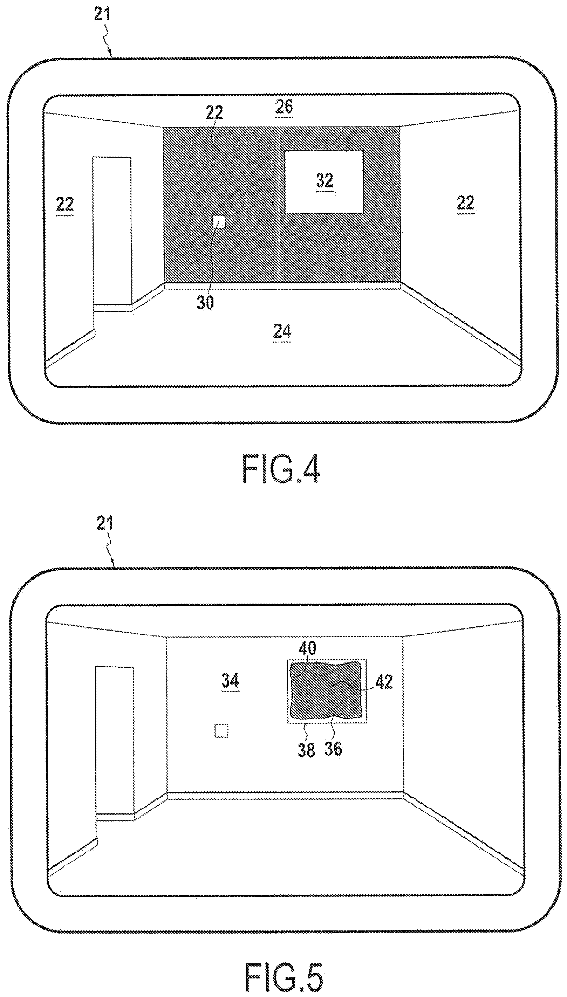

Néanmoins, il est également possible d'exclure le traitement de la surface déterminée correspondant à l'interrupteur 30 et à celle correspondant à la portion de mur 32, en re-sélectionnant celles-ci spécifiquement lorsqu'elles ont été préalablement sélectionnées. Ces deux surfaces déterminées 30, 32 sont alors exclues de la surface à traiter par l'automate (voir figure 4).

On arrive ainsi rapidement et aisément à indiquer à l'interface la ou les surfaces qui doivent être traitées par l'automate 1.

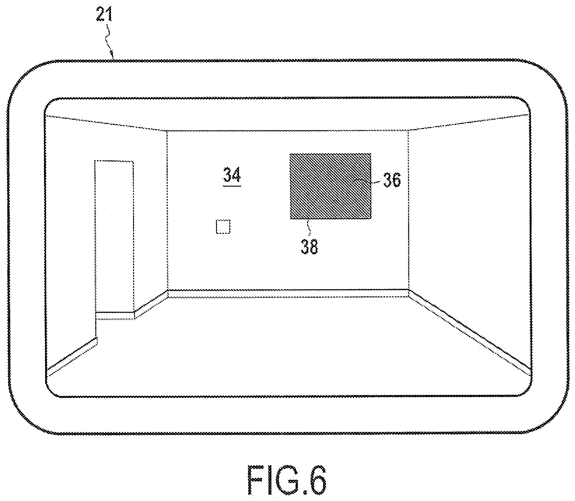

Les figures 5 et 6 illustrent un deuxième mode de sélection d'une surface via l'interface. Dans ce deuxième mode de sélection, on considère que l'interface n'est pas configurée pour identifier les différentes surfaces affichées sur son écran 21.

Dans ce deuxième mode de sélection, la portion de pièce affichée par l'écran 21 de l'interface peut être le résultat d'un balayage de la pièce par un scanner ou une caméra 3D. Alternativement, la portion de pièce affichée peut être une représentation de la pièce obtenue par une photo ou directement tracée par l'opérateur, complétée par des informations saisies par l'opérateur telles les dimensions ou la géométrie du ou des différents éléments affichés à l'écran.

La figure 5 illustre une portion de pièce telle qu'affichée par l'écran 21 de l'interface. La portion de pièce peut comprendre notamment un mur 34 dont une portion 36 a été délimitée par un contour 38 visible sur le mur 34. La portion de pièce affichée à l'écran 21 peut notamment être obtenue par un scanner ou par une photographie de la pièce.

Afin de sélectionner une surface à traiter, et en particulier la surface 36 délimitée par le contour 38, l'opérateur trace alors sur l'écran, un contour fermé 40 délimitant une surface délimitée 42. Le contour 40 étant effectué à la main par l'opérateur, celui-ci ne correspond pas exactement au contour 38 de la surface 36 à traiter.

L'interface peut alors modifier le contour 40 de la surface délimitée 42, de manière à le faire correspondre avec des singularités affichées à l'écran 21, dans le cas présent avec le contour 38. La surface sélectionnée est alors modifiée de manière à correspondre à la surface 36 qui est celle devant être traitée par l'automate 1 (figure 6).

On arrive ainsi à indiquer à l'interface la ou les surfaces qui doivent être traitées par l'automate 1, sans nécessiter une modélisation préalable de la pièce.

Quelle que soit le mode de sélection de la surface à traiter, l'unité de commande 20 peut également permettre à un opérateur de préciser les tâches à accomplir et leurs paramètres, ainsi que prendre connaissance des différents messages d'état ou des alertes détectés par l'unité de commande 20. Ainsi, l'unité de commande 20 peut permettre à l'opérateur de préciser : les paramètres de traitement, par exemple de ponçage (vitesse, effort, ...), ou de peinture (nombre de couches à appliquer, type de peinture, quantité de peinture, motif, entrelacement des couches, recouvrement de deux passes contigües, ...) ; les différentes zones de la surface à traiter, notamment lorsque les paramètres de traitement ne doivent pas être uniformes sur toute la surface à traiter, mais doivent changer selon des données déterminées.

Afin de permettre à l'automate 1 de se repérer et de se déplacer dans l'espace pour traiter les différentes surfaces, celui-ci peut comprendre des capteurs. Les capteurs peuvent être de différentes technologies, selon l'amplitude et/ou les précisions des distances concernées. Ainsi, l'automate 1 peut comprendre deux capteurs de distance, par exemple à ultrasons, montés dans le plan de traitement du bras 10 et permettant de déterminer d'une part la distance entre la surface à traiter et l'automate 1, et d'autre part l'angle entre l'axe de l'automate 1 et la surface à traiter. On s'assure ainsi, grâce à ces capteurs, que le bras 10 effectue bien le traitement à la bonne distance de la surface à traiter, et en se déplaçant parallèlement à celle-ci.

Alternativement, lorsque le traitement requiert un contact avec la surface à traiter, par exemple un ponçage, la détermination de la distance à la surface à traiter, et éventuellement l'angle entre l'axe de l'automate 1 et la surface à traiter, pourront être directement évalués par l'outil de traitement, à partir de capteurs de résistance internes utilisés pour contrôler la force appliquée sur la surface à traiter.

L'automate 1 peut également comprendre des capteurs de temps de vol, par exemple laser, pour contrôler la position de l'automate 1 dans son environnement. A cet effet, des balises peuvent également être positionnées à différents endroits identifiés par l'automate 1, afin de garantir qu'il se trouve bien en face de la portion de surface à traiter. De tels capteurs permettent également de s'assurer que les déplacements de l'embase 2 se font parallèlement à la surface à traiter, de manière à ce que les jonctions entre les différentes subdivisions coïncident.

Alternativement, il est également possible de prévoir, en plus des capteurs ou en remplacement des capteurs, une ou plusieurs caméras permettant à l'automate 1 de se positionner dans son environnement en trois dimensions. Ainsi, deux caméras positionnées de manière stéréoscopiques peuvent permettre à l'unité de commande 20 de se situer dans l'espace en déterminant la distance et l'angle séparant l'automate 1 des surfaces à traiter ou des surfaces délimitant son environnement de déplacement. Cela peut également permettre à l'automate 1 de se déplacer d'une partie de surface à traiter à une autre, lorsque celles-ci sont distinctes et séparées l'une de l'autre, comme cela est décrit plus haut.

Dans tous les cas, une étape préalable de calibration de la position initiale de l'automate 1 dans son environnement, peut être nécessaire pour la mise en œuvre des étapes de localisation et de positionnement lors du traitement de la surface à traiter.

Enfin, l'automate 1 peut également comprendre des capteurs de présence, permettant de s'assurer que l'automate 1 peut travailler à proximité d'individus sans les heurter ou les blesser. Par exemple, l'automate 1 peut comprendre des capteurs optiques formant une barrière entre la zone d'évolution de l'automate 1, et plus particulièrement la zone d'évolution de la plateforme 6 et du bras 10, et le reste de la pièce. Ainsi, en cas de détection d'une intrusion d'un objet dans ladite zone d'évolution, la commande de la plateforme 6 et du bras 10 peut être interrompue afin de s'assurer de ne blesser personne ou de ne pas endommager l'automate 1. Par ailleurs, ou alternativement, l'unité de commande 20 peut surveiller la commande des différents moyens de déplacement de l'automate 1, par exemple ceux de l'embase 2 ou de la plateforme 6, afin de détecter une éventuelle obstruction à une commande de déplacement. Dans ce cas, la commande peut être stoppée, voire même inversée, et l'automate 1 peut se mettre en attente jusqu'à ce qu'une personne vienne vérifier les raisons de l'obstruction. On s'assure alors que l'automate 1 peut effectivement évoluer au milieu d'individus sans risquer de les blesser.

Ainsi, grâce à l'invention, il devient possible de traiter, à l'aide d'un automate, une surface à traiter, tout en permettant à des individus d'intervenir à proximité de l'automate. En particulier, l'entrée des instructions relatives à l'identification des surfaces à traiter est rendu aisé grâce à l'interface spécifique de l'automate. L'automate peut donc servir d'assistant au sein d'un chantier, afin d'effectuer notamment les tâches les plus répétitives et sans technicité particulière. Il peut notamment effectuer un traitement de mise en peinture, par exemple par projection de peinture sur la surface, ou bien de ponçage, par exemple par rotation d'un moyen abrasif à la surface à traiter, voire l'application d'enduit, par exemple par projection.

## Revendications

1. Automate (1) pour le traitement de manière autonome d'une surface à traiter, comportant un moyen de traitement (10), par exemple un bras, comprenant une extrémité mobile (12) configurée pour traiter une surface de murs, de façades, de plafonds et/ou d'objets, et une interface configurée pour indiquer à l'automate (1) la surface à traiter, **caractérisé en ce que** l'interface comporte un écran (21) configuré pour afficher une représentation en 3 dimensions, d'au moins une partie de l'environnement dans lequel se trouve la surface à traiter, à partir des données obtenues dans l'environnement ou à partir d'un fichier numérique en 3 dimensions de l'environnement, **en ce que** l'interface est configurée pour permettre à une personne de sélectionner la surface à traiter sur la représentation affichée à l'écran (21) et **en ce que** l'interface est configurée :
- pour identifier, sur la partie de l'environnement affichée par l'écran, au moins une surface déterminée entourée d'un contour fermé ; et pour permettre à l'utilisateur de sélectionner la surface à traiter, par sélection, sur la représentation affichée à l'écran, d'au moins une surface déterminée entourée d'un contour fermé, ou bien
- pour permettre à l'utilisateur de sélectionner par réalisation, sur la représentation affichée à l'écran, d'au moins un contour fermé définissant une surface délimitée ; pour identifier, sur la partie de l'environnement affichée par l'écran, au moins une singularité ; et pour modifier ledit contour fermé d'au moins une surface délimitée de manière à le faire correspondre avec une ou plusieurs desdites singularités.

2. Automate (1) selon la revendication 1, dans lequel l'interface est également configurée pour afficher, par exemple graphiquement ou textuellement, des informations relatives au fonctionnement de l'automate (1), par exemple ses paramètres de fonctionnement ou des anomalies.

3. Automate (1) selon la revendication précédente, dans lequel l'interface est configurée pour permettre à une personne d'exclure au moins une portion à ne pas traiter de ladite surface déterminée, par sélection, sur la représentation affichée à l'écran (21), d'une portion déterminée entourée d'un contour fermé située à l'intérieur de ladite surface déterminée.

4. Automate (1) selon l'une quelconque des revendications 1 à 3, dans lequel l'interface est configurée pour permettre à une personne d'exclure au moins une portion à ne pas traiter de ladite surface délimitée, par réalisation, sur la représentation affichée à l'écran (21), d'un contour fermé définissant une portion délimitée située à l'intérieur de ladite surface délimitée.

5. Automate (1) selon la revendication 1 à 4, dans lequel ladite au moins une singularité est un ou plusieurs coins ou une ou plusieurs arêtes.

6. Automate (1) selon l'une quelconque des revendications précédentes, dans lequel l'écran (21) de l'interface est tactile et/ou dans lequel l'interface comprend un dispositif de pointage manuel, distinct de l'écran (21), tel une souris ou un pavé tactile

7. Automate (1) selon l'une quelconque des revendications précédentes, dans lequel l'écran (21) est configuré pour afficher la représentation en 3 dimensions, d'au moins une partie de l'environnement dans lequel se trouve la surface à traiter, à partir d'un fichier de modélisation 3D dudit environnement.

8. Automate (1) selon l'une quelconque des revendications précédentes, dans lequel les données obtenues dans l'environnement sont reçues d'un moyen de balayage de ladite pièce, tel un scanner ou une caméra 3D.

9. Automate (1) selon l'une quelconque des revendications précédentes, comportant également :
- une embase (2) configurée pour se déplacer sur le sol, et
- une plateforme (6) montée sur l'embase et configurée pour se déplacer, au moins en partie, perpendiculairement à l'embase, par exemple verticalement,
et dans lequel le moyen de traitement (10) est monté sur la plateforme (6).

10. Automate (1) selon l'une quelconque des revendications précédentes, comprenant également des capteurs de présence et configuré pour limiter, voire éviter, les contacts avec des obstacles potentiels, par exemple avec des personnes.

11. Automate (1) selon l'une quelconque des revendications précédentes, dans lequel le traitement de surface est une mise en peinture, un ponçage et/ou une projection d'enduit.

## Patentansprüche

1. Automat (1) für die selbstständige Behandlung einer zu behandelnden Oberfläche, umfassend eine Behandlungseinrichtung (10), beispielsweise einen Arm, umfassend ein bewegliches Ende (12), das konfiguriert ist, um eine Oberfläche von Wänden, Fassaden, Decken und/oder Objekten zu bearbeiten, und eine Benutzeroberfläche, die konfiguriert ist, um dem Automaten (1) die zu bearbeitende Oberfläche anzugeben, **dadurch gekennzeichnet, dass** die Benutzeroberfläche einen Bildschirm (21) umfasst, der konfiguriert ist, um eine dreidimensionale Darstellung von mindestens einem Teil der Umgebung, in der sich die zu behandelnde Oberfläche befindet, anhand der in der Umgebung erlangten Daten oder anhand einer dreidimensionalen digitalen Datei der Umgebung anzuzeigen, dass die Benutzeroberfläche konfiguriert ist, um einer Person zu ermöglichen, die zu behandelnde Oberfläche auf der Darstellung auszuwählen, die auf dem Bildschirm (21) angezeigt wird, und dadurch, dass die Benutzeroberfläche zu Folgendem konfiguriert ist:
- Identifizieren, auf dem Teil der Umgebung, der auf dem Bildschirm angezeigt wird, mindestens einer bestimmten Oberfläche, die von einer geschlossenen Kontur umgeben ist; und dem Benutzer ermöglichen, die zu behandelnde Oberfläche durch Auswahl mindestens einer bestimmten Oberfläche, die von einer geschlossenen Kontur umgeben ist, auf der Darstellung, die auf dem Bildschirm angezeigt wird, auszuwählen, oder
- dem Benutzer ermöglichen, durch Ausführen auf der Darstellung, die auf dem Bildschirm angezeigt wird, mindestens eine geschlossene Kontur auszuwählen, die eine abgegrenzte Oberfläche definiert; um auf dem Teil der Umgebung, der von dem Bildschirm angezeigt wird, mindestens eine Singularität zu identifizieren; und Modifizieren der geschlossenen Kontur von mindestens einer abgegrenzten Oberfläche, damit sie mit einer oder mehreren der Singularitäten übereinstimmt.

2. Automat (1) nach Anspruch 1, wobei die Benutzeroberfläche auch konfiguriert ist, um Informationen in Bezug auf den Betrieb des Automaten (1), zum Beispiel seine Betriebsparameter oder Störungen, anzuzeigen, beispielsweise grafisch oder als Text.

3. Automat (1) nach dem vorherigen Anspruch, wobei die Benutzeroberfläche konfiguriert ist, um einer Person zu ermöglichen, mindestens einen nicht zu behandelnden Abschnitt der bestimmten Oberfläche auszuschließen, indem sie auf der Darstellung, die auf dem Bildschirm (21) angezeigt wird, einen bestimmten Abschnitt auswählt, der von einer geschlossenen Kontur umgeben ist, die sich innerhalb der bestimmten Oberfläche befindet.

4. Automat (1) nach einem der Ansprüche 1 bis 3, wobei die Benutzeroberfläche konfiguriert ist, um einer Person zu ermöglichen, durch Ausführen, auf der Darstellung, die auf dem Bildschirm (21) angezeigt wird, einer geschlossenen Kontur, die einen begrenzten Abschnitt definiert, der sich innerhalb der begrenzten Oberfläche befindet, mindestens einen nicht zu behandelnden Abschnitt der begrenzten Oberfläche auszuschließen.

5. Automat (1) nach Anspruch 1 bis 4, wobei die mindestens eine Singularität eine oder mehrere Ecken oder eine oder mehrere Kanten ist.

6. Automat (1) nach einem der vorherigen Ansprüche, wobei der Bildschirm (21) der Benutzeroberfläche berührungsempfindlich ist und/oder wobei die Benutzeroberfläche eine von dem Bildschirm (21) getrennte Vorrichtung als manuellen Zeiger, wie beispielsweise eine Maus oder ein Touchpad, umfasst.

7. Automat (1) nach einem der vorherigen Ansprüche, wobei der Bildschirm (21) konfiguriert ist, um die dreidimensionale Darstellung von mindestens einem Teil der Umgebung, in der sich die zu behandelnde Oberfläche befindet, anhand einer 3D-Modellierungsdatei der Umgebung anzuzeigen.

8. Automat (1) nach einem der vorherigen Ansprüche, wobei die in der Umgebung erlangten Daten von einer Einrichtung zum Abtasten des Teils, wie beispielsweise einem Scanner oder einer 3D-Kamera, empfangen werden.

9. Automat (1) nach einem der vorherigen Ansprüche, der auch Folgendes umfasst:
- eine Basis (2), die konfiguriert ist, um sich auf dem Boden zu bewegen, und
- eine Plattform (6), die auf der Basis montiert und konfiguriert ist, um sich zumindest teilweise senkrecht zu der Basis zu bewegen, beispielsweise vertikal,
und wobei die Behandlungseinrichtung (10) auf der Plattform (6) montiert ist.

10. Automat (1) nach einem der vorherigen Ansprüche, auch umfassend Anwesenheitssensoren und der konfiguriert ist, um den Kontakt mit potenziellen Hindernissen, beispielsweise mit Menschen, einzuschränken oder sogar zu verhindern.

11. Automat (1) nach einem der vorherigen Ansprüche, wobei die Oberflächenbehandlung ein Auftrag von Lack, Schleifen und/oder Aufspritzen von Verputz ist.

## Claims

1. An automaton (1) for treating, in autonomous manner, a surface for treatment, the automaton comprising treatment means (10), e.g. an arm, having a movable end (12) configured to treat a surface of walls, facades, ceilings, and/or objects, and an interface configured to indicate to the automaton (1) the surface that is to be treated, the automaton being **characterized in that** the interface comprises a screen (21) configured to display a three-dimensional representation, of at least a portion of the surroundings in which the surface for treatment is to be found, on the basis of data obtained from the surroundings or from a digital file of the surroundings in three dimensions, **in that** the interface is configured to enable a person to select the surface for treatment on the representation displayed on the screen (21) and **in that** the interface is configured:
- to identify, in the portion of the surroundings that is displayed on the screen, at least one determined surface that is surrounded by a closed outline; and to enable a person to select the surface for treatment by selecting, on the representation displayed on the screen, at least one determined surface surrounded by a closed outline, or
- to enable a person to select the surface for treatment by making at least one closed outline on the representation displayed on the screen in order to define a defined surface; to identify at least one singularity in the portion of the surroundings displayed on the screen; and to modify the closed outline of at least one defined surface so as to make it correspond with one or more of said singularities.

2. An automaton (1) according to claim 1, wherein the interface is also configured to display, e.g. graphically or with text, information about the operation of the automaton (1), e.g. its operating parameters or any anomalies.

3. An automaton (1) according to the preceding claim, wherein the interface is configured to enable a person to exclude at least a portion of said determined surface that is not to be treated by selecting, on the representation displayed on the screen (21), a determined portion surrounded by a closed outline that is situated inside said determined surface.

4. An automaton (1) according to any one of claims 1 to 3, wherein the interface is configured to enable a person to exclude at least a portion of said defined surface that is not to be treated, by making a closed outline on the representation displayed on the screen (21) in order to define a defined portion situated inside said defined surface.

5. An automaton (1) according to claim 1 to 4, wherein said at least one singularity is one or more corners or one or more edges.

6. An automaton (1) according to any preceding claim, wherein the screen (21) of the interface is a touch screen and/or wherein the interface includes a manually operated pointing device, distinct from the screen (21), such as a mouse or a touch pad.

7. An automaton (1) according to any preceding claim, wherein the screen (21) is configured to display the representation in three dimensions, of at least a portion of the surroundings in which the surface for treatment is to be found on the basis of a file containing a 3D model of said surroundings.

8. An automaton (1) according to any preceding claim, wherein the data obtained in the surroundings is received by scanning said surroundings, e.g. by means of a scanner or a 3D camera.

9. An automaton (1) according to any preceding claim, further comprising:
- a base (2) configured to move over the ground; and
- a platform (6) mounted on the base and configured to move, at least in part, perpendicularly to the base, e.g. vertically;
and wherein the treatment means (10) are mounted on the platform (6).

10. An automaton (1) according to any preceding claim, further comprising presence sensors and configured to limit, or indeed avoid, contacts with potential obstacles, e.g. people.

11. An automaton (1) according to any preceding claim, wherein the surface treatment is painting, sanding, and/or spraying a coating.
